Europäisches Patentamt

European Patent Office

Office européen des brevets

(11) Veröffentlichungsnummer: **0 234 595**
**A2**

(12) **EUROPÄISCHE PATENTANMELDUNG**

(21) Anmeldenummer: **87102853.6**

(22) Anmeldetag: **27.02.87**

(51) Int. Cl.4: **G01J 1/04** , **G02B 5/04** , **F23N 5/08**

(30) Priorität: **27.02.86 DE 3606352**

(43) Veröffentlichungstag der Anmeldung:
**02.09.87 Patentblatt 87/36**

(84) Benannte Vertragsstaaten:
**DE ES FR GB IT NL SE**

(71) Anmelder: **Firma Carl Zeiss**

**D-7920 Heidenheim (Brenz)(DE)**
**DE ES FR GB IT NL SE**
Anmelder: **CARL-ZEISS-STIFTUNG trading as**
**CARL ZEISS**

**D-7920 Heidenheim (Brenz)(DE)**
**GB**

(72) Erfinder: **Gaida, Gerhard, Dr.**
**Eichwaldstrasse 34**
**D-7080 Aalen(DE)**
Erfinder: **Krug, Franz**
**Köhlerstrasse 29**
**D-7080 Aalen-Ebnat(DD)**

(54) **Lichtsammelnde Optik für einen Flammendetektor.**

(57) Für den Flammendetektor eines Nachbrenners in einem Flugzeugtriebwerk wird eine sammelnde Optik angegeben, die aus einem einzigen transparenten prismatischen Körper besteht. Mit diesem prismatischen Körper kann die Empfindlichkeit der Strahlungsanzeige wesentlich erhöht werden, ohne daß Wartungs-oder Nachjustierarbeiten in Kauf genommen werden müssen.

## Fig. 4

## Lichtsammelnde Optik für einen Flammendetektor

Die Erfindung betrifft eine lichtsammelnde Optik für den Flammendetektor eines Nachbrenners in einem Flugzeugtriebwerk.

Für die optimale Steuerung von Triebwerken ist die korrekte Zündung der Nachbrennerflamme eine wichtige Voraussetzung. Detektoren, die eine sichere Aussage darüber liefern, ob eine Flamme im Nachbrenner gezündet hat, müssen eine Ansprechzeit von weniger als 100 msec. aufweisen. Als Detektor für die Anzeige der von der Flamme emittierten Strahlen wird üblicherweise eine für den ultravioletten Spektralbereich von 200 nm bis 270 nm empfindliche, gasgefüllte Schaltröhre als Strahlungsempfänger verwendet, die eine empfindliche Fläche von ca. 10 mm Länge und 1 mm Breite aufweist, und die in einem sehr großen Winkelbereich von mehr als 120° anspricht. Wenn der Strahlungsempfänger an der Peripherie des Brennraumes angebracht ist, füllt die Flamme einen sehr großen Teil des möglichen Gesichtwinkels des Strahlungsempfängers aus. Mit einer lichtsammelnden Optik kann die Anzeigeempfindlichkeit des Flammendetektors erhöht werden.

Der Erfindung liegt die Aufgabe zugrunde, eine lichtsammelnde Optik anzugeben, die erschütterungsunempfindlich ist, sich nicht dejustiert, möglichst wartungsfrei arbeitet und bei Temperaturen bis 250oC einsetzbar ist.

Diese Aufgabe wird erfindungsgemäß dadurch gelöst, daß als lichtsammelnde Optik ein prismatischer Körper mit total reflektierenden Flächen vorgesehen ist und daß dieser prismatische Körper mindestens eine Bohrung für einen Strahlungsdetektor enthält, und daß dieser prismatische Körper außerdem zum Brennraum des Nachbrenners hin einen konischen Verlauf aufweist und aus einem für den vom Strahlungsdetektor nachgewiesenen Wellenlängenbereich transparent ist.

In einem vorteilhaften Ausführungsbeispiel der Erfindung besteht der prismatische Körper aus einem für den Wellenlängenbereich von 200 nm bis 270 nm transparenten Quarz, der unter der Bezeichnung Suprasil bekannt ist.

Zweckmäßigerweise ist der prismatische Körper als Lichtschacht mit einer dem Brennraum des Nachbrenners zugewandten Eintrittsfläche und mit außenverspiegelten Seitenflächen ausgebildet. Die Ausführung des Lichtschachtes aus einem im genannten Wellenlängenbereich transparenten Material hat zur Folge, daß kein Abschlußfenster bzw. Strahleneinlaßfenster notwendig ist.

In einem bevorzugten Ausführungsbeispiel der Erfindung sind in dem prismatischen Körper zwei Bohrungen zur Aufnahme von je einem Strahlungsdetektor vorgesehen, wobei die zweite Bohrung unmittelbar hinter der ersten angeordnet ist. Die Verwendung von zwei Strahlungsdetekoren erhöht die Betriebssicherheit, da zwei voneinander unabhängige Signale geliefert werden.

Die mit der Erfindung erzielten Vorteile bestehen insbesondere darin, daß durch die Verwendung eines einzigen hochwirksamen optischen Teiles die Zuverlässigkeit der Detektorvorrichtung erhöht wird.

Ein Ausführungsbeispiel der Erfindung ist in der Zeichnung dargestellt und wird im folgenden näher beschrieben. Es zeigen:

Fig. 1 eine Darstellung des Strahlenverlaufes ohne Reflektionen an den Seitenwänden des prismatischen Körpers;

Fig. 2 eine Darstellung des Strahlenganges mit je einer Reflektion der Begrenzungsstrahlen;

Fig. 3 eine perspektivische Darstellung des prismatischen Körpers;

Fig. 4 eine Schnittdarstellung durch den in ein Gehäuse eingegossenen prismatischen Körper.

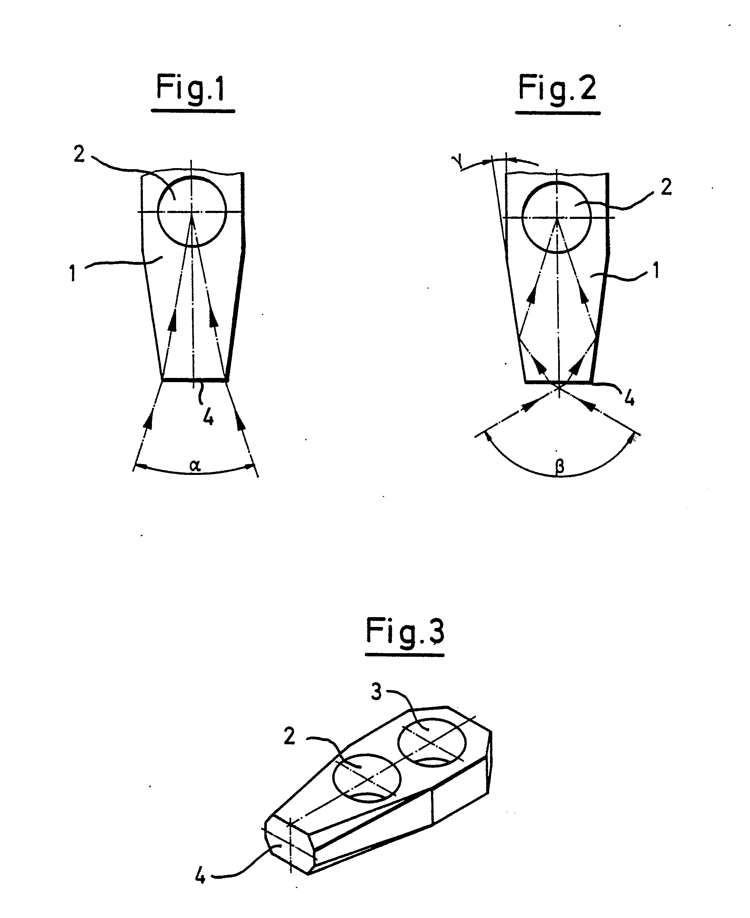

In den Darstellungen der Figuren 1 und 2 ist mit (1) der prismatische Körper bezeichnet und mit (2) ein Bohrloch zur Aufnahme eines Strahlungsdetektors. Mit dem in Fig. 1 eingezeichneten Eintrittsgrenzwinkel $\alpha$ der Strahlung ergibt sich eine zentrale Empfindlichkeitskeule für die Strahlungsanzeige im Mittelpunkt der Bohrung (2) ohne Reflektionen an den Seitenflächen des prismatischen Körpers (1).

In dem in Fig. 2 eingezeichneten Strahlungsverlauf mit dem Akzeptanzwinkel $\beta$ ergibt sich für die Begrenzungsstrahlen je eine Reflektion innerhalb des als Lichtschacht wirkenden prismatischen Körpers (1), und im Mittelpunkt des Bohrloches (2) ist die sogenannte erste Nebenkeule der Eintrittsstrahlung gekennzeichnet. Mit dem Winkel $\gamma$ ist die Konizität des Lichtschachtes definiert. Der konische Verlauf des Lichtschachtes beeinflußt den Akzeptanzwinkel $\beta$.

In der Darstellung der Fig. 3 ist hinter dem Bohrloch (2) ein weiteres Bohrloch (3) zur Aufnahme einer als Strahlungsempfänger verwendeten gasgefüllten Schaltröhre eingezeichnet. Die Verwendung einer zweiten Röhre erhöht die Betriebssicherheit der Detektorvorrichtung, da zwei unabhängige Signale für die Anzeige erhalten werden. Die Abschlußfläche (4) des als Lichtschacht ausgebildeten prismatischen Körpers (1) schließt direkt an den Brennraum an, damit die Flamme einen großen Teil des möglichen Gesichtswinkels der Detektorvorrichtung ausfüllen kann.

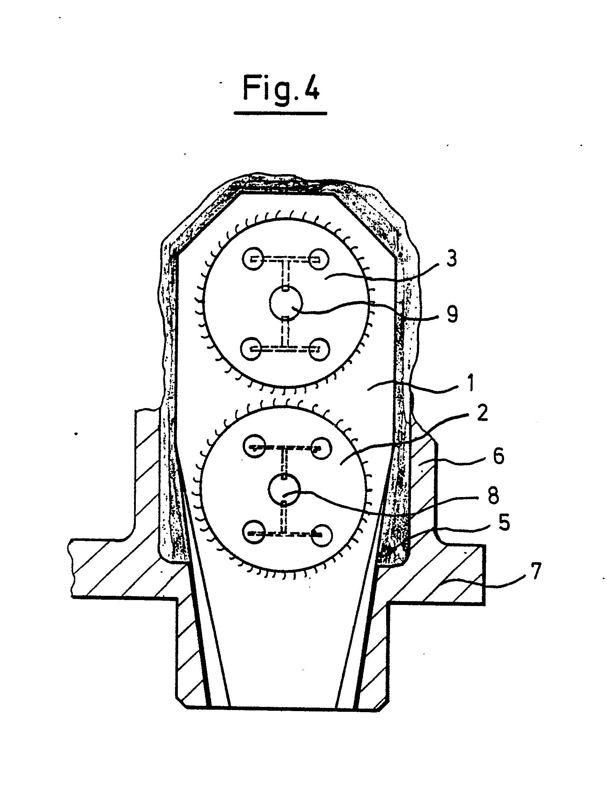

In der Schnittdarstellung der Fig. 4 ist der als Lichtschacht ausgebildete prismatische Körper (1) mit einem hitzebeständigen Silikonkleber (5) in einem Gehäuse (6) eingegossen, das einen Anschlußflansch (7) zur Montage am Triebwerk (nicht gezeichnet) besitzt. In den Bohrlöchern (2 und 3) befinden sich gasgefullte Schaltröhren (8,9), die in einer nicht gezeichneten Schaltung mit einer Spannung von mehreren 100 V angesteuert werden und die beim Auftreffen von Licht im Wellenlängenbereich von 200 nm bis 270 nm auf ihre Kathoden eine Gasentladung zunden.

**Ansprüche**

1. Lichtsammëlnde Optik für den Flammendetektor eines Nachbrenners in einem Flugzeugtriebwerk, dadurch gekennzeichnet, daß in einem prismatischen Körper (1) mit reflektierenden Flächen mindestens eine Bohrung (2) für einen Strahlungsdetektor vorgesehen ist und daß der prismatische Körper (1) zum Brennraum des Nachbrenners hin einen konischen Verlauf aufweist und aus einem für den vom Strahlungsdetektor nachgewiesenen Wellenlängenbereich transparent ist.

2. Lichtsammelnde Optik nach Anspruch 1, dadurch gekennzeichnet, daß der prismatische Körper (1) aus einem für den Wellenlängenbereich von 200 nm bis 270 nm transparenten Quarz besteht.

3. Lichtsammelnde Optik nach Anspruch 2, dadurch gekennzeichnet, daß der prismatische Körper (1) als Lichtschacht mit einer dem Brennraum zugewandten Eintrittsfläche (4) und außenverspiegelten Seitenflächen ausgebildet ist.

4. Lichtsammelnde Optik nach Anspruch 3, dadurch gekennzeichnet, daß in dem prismatischen Körper (1) zwei oder mehr Bohrungen (2,3) zur Aufnahme von je einem Strahlungsdetektor vorgesehen sind.

5. Lichtsammelnde Optik nach Anspruch 4, dadurch gekennzeichnet, daß die Bohrungen (2,3) in Längsrichtung des prismatischen Körpers (1) hintereinander angeordnet sind.

# Fig.1

# Fig.2

# Fig.3

# Fig.4